# Europäisches Patentamt

# European Patent Office

# Office européen des brevets

(19)

(11) Veröffentlichungsnummer: **0 264 644**

**A2**

(12) **EUROPÄISCHE PATENTANMELDUNG**

(21) Anmeldenummer: **87113787.3**

(22) Anmeldetag: **21.09.87**

(51) Int. Cl.⁴: **H04M 3/58**

(30) Priorität: **23.09.86 DE 3632200**

(43) Veröffentlichungstag der Anmeldung:
**27.04.88 Patentblatt 88/17**

(84) Benannte Vertragsstaaten:
**DE GB NL**

(71) Anmelder: **Siemens Aktiengesellschaft Berlin und München**
**Wittelsbacherplatz 2**
**D-8000 München 2(DE)**

(72) Erfinder: **Strzeletz, Wolfgang, Dipl.-Ing.**
**Knufstrasse 18**
**D-4290 Bocholt(DE)**

(54) Schaltungsanordnung zur Nachbildung des NSI-Kontaktes mittels der Halteschaltung in einem Zweiwegefernsprecher.

(57) Die Erfindung betrifft eine Schaltungsanordnung zur Nachbildung des NSI-Kontaktes mittels der elektronischen Halteschaltung in einem über die Teilnehmerleitung gespeisten Zweiwegefernsprecher.

Die Aufgabe besteht darin, die Halteschaltung in einfacher, wirtschaftlicher Weise für die Funktionsweise des NSI-Kontaktes umzugestalten, wobei galvanische Trennung von Leitung und Sprechschaltung, Integrierbarkeit und schaltbar mit Tasten eines üblichen Tastenblockes gewährleistet sein müssen.

Dies wird erreicht, indem der in der Halteschaltung zum Abschließen der Teilnehmerleitung mit einem Lastwiderstand versehene Strompfad zwischen den Adern der Teilnehmerleitung im Takt der Wahlimpulse durchgeschaltet und aufgetrennt wird, wobei jedoch der Lastwiderstand überbrückt wird. Das Überbrücken erfolgt mit Transistoren, die über einen Transistor-Optokoppler durch den Mikroprozessor gesteuert werden.

Die Anwendung erfolgt bei Zweiwegefernsprechern.

## Schaltungsanordnung zur Nachbildung des NSI-Kontaktes mittels der Halteschaltung in einem Zweiwegefernsprecher

Die Erfindung betrifft eine Schaltungsanordnung zur Nachbildung des NSI-Kontaktes mittels der elektronischen Halteschaltung in einem über die Teilnehmerleitung gespeisten Zweiwegefernsprecher mit Mikroprozessorsteuerung, mit einer Gleichrichterbrücke je Teilnehmerleitung als Verpolungsschutz, mit einem Tastenblock für die Teilnehmerwahl und für Sonderfunktionen, mit einer Sprechschaltung mit einer Umschalteinrichtung zur Wahl der zu belegenden Teilnehmerleitung und mit je einer elektronischen Halteschaltung zwischen den Adern jeder Teilnehmerleitung, wobei die Halteschaltung einen über den Mikroprozessor an- und abschaltbaren, aus der Serienschaltung eines Thyristors, eines Lastwiderstandes und eines Längstransistors bestehenden Strompfad enthält.

Obengenannte Fernsprechstationen sind als Zweiwegefernsprecher bekannt (Zweiwegefernsprecher, Bedienungsanleitung der Deutschen Bundespost FeTAp 2L-716-796), wobei die einzelnen Teilnehmerleitungen beispielsweise mit Hilfe verrastbarer Tasten wahlweise angeschaltet werden können und wobei bei Rückfrage oder beim Makeln die zwischen den a/b-Adern notwendigen Haltewiderstände durch Kontakte der Tasten oder durch Relaiskontakte an-und abgeschaltet werden können.

Um Relais und konstruktiv aufwendige verrastende Tasten zu vermeiden, ist bereits vorgeschlagen worden, die notwendige Halteschaltung elektronisch auszuführen, so daß sie mit Hilfe des in der Fernsprechstation enthaltenen Mikroprozessors über die Tastatur (Tastenblock) der Fernsprechstation gesteuert werden kann. Das bedeutet, daß eine Teilnehmerleitung im Wartezustand über einen einen Haltewiderstand aufweisenden Strompfad abgeschlossen ist und daß im nachfolgenden Betriebszustand (Gesprächszustand) dieser Teilnehmerleitung der Strompfad gesperrt wird.

Die Aufgabe der Erfindung soll nun darin bestehen, die elektronische Halteschaltung ohne großen Aufwand so auszubauen, daß sie zusätzlich als NSI-Kontakt beim Wählvorgang an der Fernsprechstation verwendet werden kann, wobei die Schaltungsanordnung integrierbar sein soll, wobei die spannungsmäßige (Hochspannung) Trennung von Teilnehmerleitung und Sprechschaltung und eine Steuerung mit nur für geringe Ströme ausgelegten Bedienungselementen gegeben ist.

Dies wird dadurch erreicht, daß zur Nachbildung des geschlossenen NSI-Kontaktes der Strompfad durchgeschaltet ist, wobei der darin enthaltene Lastwiderstand durch eine Anordnung von Halbleiterbausteinen überbrückt ist und wobei die Steuerung der Anordnung über einen seinerseits von dem Mikrocomputer gesteuerten Transistor-Optokoppler erfolgt und daß zur Nachbildung des geöffneten NSI-Kontaktes der Längstransistor und der Thyristor durch den Mikroprozessor im Sperrzustand gesteuert werden.

Hieraus ergibt sich der Vorteil, daß der den geschlossenen NSI-Kontakt anzeigende Kurzschluß zwischen den a/b-Adern und die den offenen NSI-Kontakt darstellende vollständige Auftrennung der Halteschaltung gegeben ist, daß die Schaltungsanordnung integrierbar ist, die Steuerung mit leistungsschwachen Bedienelementen möglich ist und auch eine galvanische Trennung von Teilnehmerleitung und Sprechschaltung vorliegt.

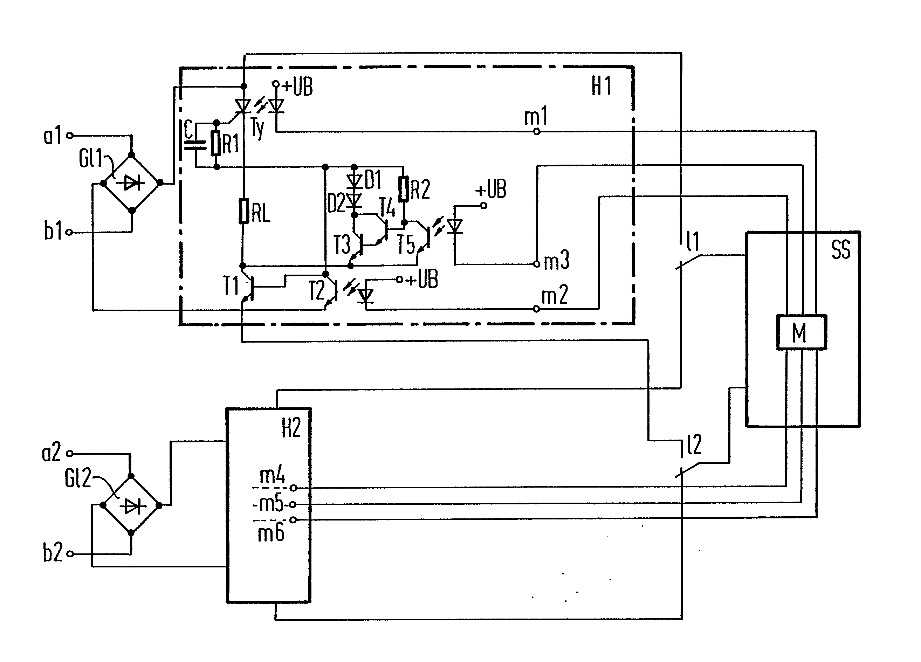

Die Schaltungsanordnung wird anhand einer Zeichnung erklärt. Die Zeichnung zeigt eine Sprechschaltung SS mit einem Mikroprozessor M, die beiden Halteschaltungen H1 und H2, die als Verpolungsschutz gedachten Gleichrichterbrücken Gl1 und Gl2, die beiden Teilnehmerleitungen a1/b1 und a2/b2 und die beiden Leitungsumschaltkontakte l1 und l2.

Die beiden Halteschaltungen H1 und H2 sind von gleicher Bauart. Die Halteschaltung H1 zeigt nähere Einzelheiten wie den Thyristor Ty mit dem Haltekreis C/R1, dem Haltewiderstand oder Lastwiderstand RL, dem Längstransistor T1, den Transistor-Optokopplern T2 und T5 und den Schalttransistoren T3 und T4. Außerdem sind die Steueranschlußpunkte für den Mikroprozessor mit m1, m2 und m3 angegeben (m4, m5 und m6 für H2).

Nachstehend wird die Funktion der Schaltungsanordnung näher erläutert.

1.) Funktion als Halteschaltung.

Im Ruhezustand der Schaltungsanordnung z.B. für die Halteschaltung H1 liegt an den Steuerpunkten m1, m2 und m3 kein Potential an. Es sei nun angenommen, daß zuerst über die Teilnehmerleitung a1/b1 gewählt und gesprochen wurde, daß dann durch Betätigen einer hierfür gewählten Taste des Tastenblocks eine Umschaltung z.B. zwecks Rückfrage auf die Teilnehmerleitung a2/b2 eingeleitet wurde, wobei auf Grund der gewählten Taste auch angesagt wurde, daß die Teilnehmerleitung a1/b1 in Wartestellung zu halten sei. Der Mikroprozessor M erkennt den Teilnehmerwunsch. Er -schaltet in nicht dargestellter Weise die Umschaltkontakte l1 und l2 in der in der Figur gezeigten Weise. Der optisch gesteuerte Thyristor Ty erhält einen Zündimpuls über den Steueranschluß m1, wodurch er durchschaltet und durch einen über C und R1 bestimmten Haltestrom durchgeschaltet bleibt. Der Strompfad für den über die Gleichrichterbrücke Gl1 anliegenden Gleichstrom verläuft über den Thyristor Ty, den Lastwiderstand RL und den Längstransistor T1. Letzterer ist leitend geschaltet, denn es wird ein Teil des Haltestromes von Ty abgezweigt und wirkt als Basisstrom von T1, wodurch wiederum der Haltestrom für Ty aufrechterhalten wird.

Gleichzeitig liegt ein Dauerpotential am Steuerpunkt m3 an, wodurch der Transistor-Optokoppler T5 durchgeschaltet wird. Dieses Durchschalten bedeutet, daß sich für die Basis des Transistors T4 über den Widerstand R2 keine Basisspannung aufbauen kann, so daß sich die Transistoren T3 und T4 im Sperrzustand befinden. Damit ist der Lastwiderstand RL nicht überbrückt und kann bei dem vorstehenden Betriebszustand als Haltewiderstand wirksam werden. Soll die Teilnehmerleitung a1/b1 jetzt wieder durch eine Tastenbetätigung am Tastenblock auf Gesprächsbetrieb (zum wartenden Teilnehmer) geschaltet werden, dann erfolgt über den Steuerpunkt m2 ein Impuls auf den Transistor-Optokoppler T2. Dieser wird durchgeschaltet und - schaltet dadurch den Basisstrom für den Längstransistor T1 ab. Letzterer geht in Sperrschaltung und unterbricht damit auch den Haltestrom für den Thyristor Ty, der nun auch den Strompfad unterbricht. Somit ist der Lastwiderstand RL aus der Teilnehmerleitung a1/b1 geschaltet. Das Potential an m3 kann ebenfalls abgeschaltet werden. Die Halteschaltung H2 mit den Steuerpunkten m4, m5 und m6 arbeitet entsprechend.
Wenn diese Halteschaltung -z.B. H1-als NSI-Kontakt funktionieren soll, dann muß sie im Takt der Wählimpulse die Adern a1/b1 der Teilnehmerleitung auftrennen bzw. kurzschließen.

Zum Kurzschließen der Adern a1/b1 wird ein Impuls über den Steuerpunkt m1 auf den optisch gesteuerten Transistor Ty gegeben, so daß dieser, wie bereits geschildert, durchschaltet, seinen Haltestrom und den Basisstrom für den Längstransistor T1 bildet, wobei letzterer ebenfalls durchschaltet. Der Strompfad ist damit durchgeschaltet. Der Lastwiderstand RL ist jetzt über die Dioden D1 und D2 und die Transistoren T3 und T4 (Anordnung von Halbleiterbausteinen) überbrückt, da am Steuerpunkt M3 kein Potential anliegt. Somit bleibt der Transistor-Optokoppler im Sperrzustand und über den Widerstand R2 kann sich aus dem Haltestrom bzw. dem Strom durch den Strompfad eine Basisspannung ausbilden, die die Transistoren T3 und T4 durchschaltet. Die beiden Dioden D1 und D2 dienen dazu, um an dem Widerstand R2 eine definierte Spannung abfallen zu lassen.

Das dem Wähltakt entsprechende Öffnen des NSI-Kontaktes erfolgt dadurch, daß ein Steuerimpuls auf den Steuerpunkt m2 gegeben wird, wodurch der Transistor-Optokoppler durchschaltet, wodurch wiederum der Basisstrom des Längstransistors T1 abgeleitet wird. Der Längstransistor geht in Sperrzustand. Damit wird der Strompfad unterbrochen und der Thyristor T4 in Sperrzustand geschaltet.

Analog funktioniert die Halteschaltung H2 bei einer Teilnehmerwahl über die Teilnehmerleitung a2/b2. Die Spannung + UB in der Figur ist die jeweilige Betriebsspannung der Halbleiterelemente Ty, T2 und T3. Aus dem Obenstehenden geht hervor, daß nach der erfindungsgemäßen Schaltungsanordnung die elektronische Halteschaltung für Zweiwegefernsprecher in einfacher Weise als NSI-Kontakt mitverwendet werden kann. Der hier nicht behandelte NSA-Kontakt kann beispielsweise durch ein Schaltelement des vorzugsweise elektronischen Gabelumschalters realisiert werden.

## Ansprüche

Schaltungsanordnung zur Nachbildung des NSI-Kontaktes mittels der elektronischen Halteschaltung in einem über die Teilnehmerleitung gespeisten Zweiwegefernsprecher, mit Mikroprozessorsteuerung, mit einer Gleichrichterbrücke je Teilnehmerleitung als Verpolungsschutz, mit einem Tastenblock für die Teilnehmerwahl und für Sonderfunktionen, mit einer Sprechschaltung mit einer Umschalteinrichtung zur Wahl der zu belegenden Teilnehmerleitung und mit je einer elektronischen Halteschaltung zwischen den Adern jeder Teilnehmerleitung, wobei die Halteschaltung einen über den Mikroprozessor an-und abschaltbaren, aus der Serienschaltung eines Thyristors, eines Lastwiderstandes und eines Längstransistors bestehenden Strompfad enthält,
**dadurch gekennzeichnet,**
daß zur Nachbildung des geschlossenen NSI-Kontaktes der Strompfad (Ty, RL, T1) durchgeschaltet ist, wobei der darin enthaltene Lastwiderstand (RL) durch eine Anordnung von Halbleiterbausteinen (T3, T4) überbrückt ist und wobei die Steuerung der Anordnung über einen seinerseits von dem Mikrocomputer (M) gesteuerten Transistor-Optokoppler (T5) erfolgt und daß zur Nachbildung des geöffneten NSI-Kontaktes der Längstransistor (T1) und der Thyristor (Ty) durch den Mikroprozessor (M) in Sperrzustand gesteuert werden.